# EUROPÄISCHE PATENTANMELDUNG

(11) **EP 1 426 588 A1**
(43) Veröffentlichungstag der Anmeldung: **09.06.2004**
(21) Anmeldenummer: 02027204.3
(22) Anmeldetag: 05.12.2002
(51) Int. Cl.: F02C 7/052

(54) **Abscheidevorrichtung, Verfahren und Turbinenanlage zum Entfernen von Fremdbestandteilen aus einer Strömung eines Mediums**

(71) Anmelder: SIEMENS AKTIENGESELLSCHAFT, 80333 München (DE)
(72) Erfinder: Wehnert, Rene, 91056 Erlangen (DE)

(57) **Zusammenfassung**

Verfahren zum Entfernen von Fremdbestandteilen aus einer Strömung eines Mediums, Abscheidervorrichtung zur Durchführung des Verfahrens sowie Turbinenanlage mit der Abscheidervorrichtung.

Um unerwünschte Bestandteile aus einer Strömung eines Mediums, das einer Turbine zugeleitet wird, effektiv zu entfernen, wird ein Verfahren vorgeschlagen, bei dem eine Beeinträchtigung der Turbine gering gehalten ist. Das Verfahren sieht ein Einströmen des Mediums (M) mit einem Anteil von unerwünschten Bestandteilen in eine Abscheidervorrichtung (18) vor, die eine axiale Ausdehnung (L) und eine radiale Ausdehnung (R1,R2) und eine Berandung (28) der radialen Ausdehnung (R1,R2) hat. Dabei strömt das Medium (M) mit unerwünschten Bestandteilen axial in die Abscheidervorrichtung (18) ein. Zum Abscheiden ist vorgesehen, dass mindestens ein Teil des Mediums (M) mit unerwünschten Bestandteilen in eine außeraxiale Richtung beschleunigt und ein Teilstrom (32) des Mediums (M) mit dem Großteil der unerwünschten Bestandteile durch eine Öffnung (30) der Berandung (28) abgezweigt wird. Zum Ausströmen ist vorgesehen, dass eine Hauptströmung (40) des mediums (M) mit dem verringerten Anteil von unerwünschten Bestandteilen axial weitergeführt wird.

## Beschreibung

Die Erfindung betrifft ein Verfahren zum Entfernen von Fremdbestandteilen aus einer Strömung eines Mediums, das zur Zuleitung zu einer Turbine vorgesehen ist. Die Erfindung betrifft auch eine Abscheidervorrichtung zum Entfernen von Fremdbestandteilen, insbesondere von unerwünschten Bestandteilen aus einer Strömung eines Mediums. Weiter betrifft die Erfindung eine Turbinenanlage mit einem Verdichter und einer Turbine sowie eine Verwendung einer Abscheidervorrichtung.

Üblicherweise wird als Arbeitsmedium vorgesehene Luft oder ein Gas für eine stationäre Turbine mittels Gas- oder Lufteintrittsfilter, z. B. so genannter Luftansaugfilter, gereinigt. So erfordern hoch entwickelte Turbinenschaufeln für ihren Antrieb, aber auch für ihre Kühlung oder andere Störungssysteme einen relativ hohen Gas- oder Luftreinheitsgrad, der in der Regel über 95 % liegt. Hierzu weisen die Eintrittsfilter oder Reinigungssysteme entsprechende Abscheideleistungen auf. Dabei werden üblicherweise Filter in so genannten Ansaughäusern in mehreren Filterstufen zur Durchströmung mit dem Medium, d. h. Luft oder Gas oder gegebenenfalls auch Dampf, verwendet.

Aufgrund des von den Filterstufen erforderlichen großen Bauraumes ist eine Luftreinigung bei mobilen Turbinen, wie sie beispielsweise bei Flugzeugen oder Kraftfahrzeugen verwendet werden, bisher nicht möglich gewesen. Selbst bei stationären Turbinen benötigen die Filterstufen einen derart großen Bauraum, dass man von Ansaughäusern spricht. Zudem können derartige herkömmliche Filter verstopfen. Dies führt zu einem erheblichen Druckverlust bei der Strömung des Mediums, z. B.

Arbeits- oder Kühlmedium, und somit zu einer Reduzierung des Wirkungsgrades der Turbine.

Trotz aufwendiger und kostenintensiver Filteranlagen lässt sich also in der Regel ein starker Druckabfall beim anströmenden Medium und somit ein Sinken des Wirkungsgrades der Turbine nicht verhindern.

Prinzipiell sind weitere Möglichkeiten zur Reinigung eines strömenden Mediums bekannt. Diese weiteren Möglichkeiten, wie sie im Folgenden beschrieben werden, sind bisher jedoch nicht zur Reinigung eines Mediums, das zur Zuleitung zu einer Turbine vorgesehen ist, angewendet worden. Sie weisen nämlich für eine solche Anwendung noch erhebliche Nachteile auf. So finden Zyklonabscheider (Zentrifugalabscheider oder auch Fliehkraftabscheider) als so genannte mechanische Entstauber Verwendung. Eine Beschreibung solcher Abscheider findet sich beispielsweise in "Kraftwerkstechnik zur Nutzung fossiler, regenerativer und nuklearer Energiequellen", 3. neu bearbeitete Auflage von Karl Strauß oder unter den Stichworten "Drehströmungsentstauber" und "Zyklonabscheider" im "Lexikon der Technik", von Lueger (1965), 4. neu bearbeitete Auflage, Band 6, herausgegeben von H. Franke.

Das Prinzip eines Zyklonabscheiders besteht darin, eine Drehströmung zur Verfügung zu stellen, bei der alle störenden, den Abscheidegrad vermindernden Sekundärströmungen unterdrückt werden. Das heißt, es wird eine möglichst reine Drehströmung im gesamten Abscheiderraum zur Verfügung gestellt. Zyklonabscheider sehen deshalb in der Regel eine tangentiale Anströmung vor oder im Falle eines Axialzyklons einen vorverdrallten Primärstrom. Auch bei einem Axialzyklon wird der Primärstrom mit einem durch Schaufeln bewirkten Drall versehen. Es handelt sich insofern ebenfalls um eine Tangentialströmung. Die Abscheidung von unerwünschten Bestandteilen im Medium erfolgt dabei in jedem Fall durch Ausnutzung der Schwerkraft, gegebenenfalls mit Unterstützung einer zweiten, gegenläufigen Drehströmung. Das heißt, ein Zyklon ist in der Regel vertikal angeordnet. Der Primärstrom wird mittig zugeführt und dann durch Rückstau umgekehrt, so dass die Schwerkraft ein Ausfällen von unerwünschten Bestandteilen bewirkt. Dabei werden zum einen hohe Einströmgeschwindigkeiten und zum anderen eine Strömungsumkehr der Primärströmung angestrebt. Das heißt, in der Regel wird im Zyklon ein möglichst hoher Druckabfall angestrebt, um eine möglichst effektive Abscheidungsrate für Schmutzpartikel zu erreichen.

Auch das Arbeitsprinzip von anderen mechanischen Entstaubern, wie z. B. Prallblechen, sieht in der Regel plötzliche Richtungsänderungen beim anströmenden Medium vor, um dadurch ein Auszentrifugieren nicht erwünschter Schmutzteilchen in der Strömung zu erreichen, wobei die Strömung stark umgelenkt wird. Infolge der Raumerweiterung verringert sich bei allen bisher bekannten Abscheidern die Geschwindigkeit des Strömungsmittels, so dass die mitgerissenen Fremdkörperchen ausfallen können. Zusammenfassend heißt dies, dass bei allen bekannten Abscheidern und Zyklonen ein Druckabfall zu maximieren ist, um einen möglichst effektiven Abscheidegrad zu erreichen.

Abscheider führen somit in der Regel zu einem zu hohen Druckabfall bei einem anströmenden Medium. Abscheider finden deshalb bisher keine Anwendung bei Turbinen. Verringert man den Druckabfall bei Abscheidern oder verstopft ein Filter, so kann das zu Schmutzablagerungen auf Turbinenschaufeln führen. In jedem Fall erfolgt eine Verringerung des Wirkungsgrades einer Turbine entweder durch Verschmutzung oder durch einen zu hohen Druckabfall.

Es ist deshalb Aufgabe der vorliegenden Erfindung, eine Vorrichtung und ein Verfahren zum Entfernen von Fremdbestandteilen aus einer Strömung eines Mediums anzugeben, wobei eine Beeinträchtigung der Turbine möglichst gering gehalten ist.

Betreffend das Verfahren wird die Aufgabe erfindungsgemäß gelöst durch ein Verfahren zum Entfernen von Fremdbestandteilen aus einer Strömung eines Mediums, welches als Arbeitsmedium einer Turbine zugeführt wird, bei dem das Medium einer Abscheidervorrichtung in axiale Richtung zugeführt und in mindestens einer Stufe der Abscheidervorrichtung in eine außeraxiale Richtung beschleunigt wird, wobei ein einen überwiegenden Anteil der Fremdbestandteile aufweisender Teilstrom an einer Berandung einer radialen Ausdehnung der Abscheidervorrichtung abgezweigt und eine Hauptströmung des Mediums in der Abscheidervorrichtung axial weitergeführt wird.

Die Erfindung geht dabei von der Überlegung aus, dass sich das einer Turbine zuzuführende Medium aus einer Vielzahl von Bestandteilen zusammensetzt. Dabei sollte frühzeitig vor Eintritt des Mediums in die Turbine das Medium von jenen Bestandteilen gereinigt sein, die zu einer Beschädigung oder Beeinträchtigung des Wirkungsgrades der Turbine führen. Daher sollten jene unerwünschten Teile, welche schwerer als das Medium sind, vom Hauptstrom des Mediums möglichst einfach und mit einem hohen Abscheidegrad getrennt werden.

Die Erfindung beruht auf dem Konzept, dass sich durch eine Beschleunigung des Mediums in eine außeraxiale Richtung unerwünschte Fremdbestandteile in der Strömung des Mediums in Richtung der Berandung bewegen und im Bereich der Berandung sammeln. Dies können beispielsweise Wassertröpfchen, Staub oder Schmutz oder andere unerwünschte Bestandteile der Strömung sein, welche schwerer als das Medium sind. Besonders effektiv ist das Verfahren, wenn mindestens ein Teil des Mediums mit unerwünschten Bestandteilen in eine außeraxiale Richtung zur Berandung hin beschleunigt wird. Allerdings werden die unerwünschten Bestandteile nicht, wie im Stand der Technik, primär mittels einer drastischen Strömungsrichtungsänderung und dem damit verbundenen drastischen Druckabfall "ausgefällt". Eine "plötzliche" Richtungsänderung wird also weitestgehend vermieden. Statt dessen wird ein Teilstrom des Mediums mit dem Großteil der unerwünschten Bestandteile im Bereich der Berandung abgezweigt, so dass der Großteil der unerwünschten Bestandteile aus der Strömung abgeschieden wird. Dadurch wird ein Druckabfall weitestgehend vermieden. Des Weiteren wird das Medium zunächst axial weitergeführt, ohne dass eine wesentliche Richtungsänderung der Strömung vorgenommen wird. Auch dies führt dazu, dass ein Druckabfall möglichst vermieden wird, wodurch sich der Gesamtwirkungsgrad erhöht.

Unter einem Großteil oder überwiegendem Anteil von Fremdbestandteilen oder unerwünschten Bestandteilen wird im Sinne dieser Anmeldung ein Anteil von mindestens 50 % der Fremdbestandteile verstanden. Vorzugsweise lässt sich mit dem vorgeschlagenen Konzept der Anteil an unerwünschten Bestandteilen in Abhängigkeit von der Strömungsgeschwindigkeit des Mediums und der Beschleunigung der Strömung um mehr als 95 %, insbesondere um mehr als 99 % verringern. Dabei können alle Arten von Teilchen, wie z. B. Staubteilchen oder Wassertröpfchen, einer Größe von weniger als 20 µm, insbesondere von weniger als 5 µm, gegebenenfalls sogar im Bereich von 0,3 µm abgeschieden werden.

Vorteilhafte Weiterbildungen des Verfahrens sind den Unteransprüchen zu entnehmen.

Für eine möglichst geringe Beeinträchtigung der Zuführung des Arbeitsmediums in die Turbine erweist es sich als zweckmäßig, dass die Hauptströmung beim Ausströmen axial aus der Abscheidervorrichtung ausgeströmt wird. Der den Großteil von Fremdbestandteilen aufweisende Teilstrom wird zweckmäßigerweise im Wesentlichen in Richtung der außeraxialen Richtung der Beschleunigung abgeführt. Eine derartige geteilte Strömung führt zu einem möglichst geringen Druckabfall beim Strömungsverlauf des Arbeitsmediums.

In einer besonders bevorzugten Weiterbildung des Verfahrens wird mindestens ein Anteil des Mediums, z. B. Frischluft, zur Berandung hin beschleunigt, indem der Strömung eine Radialkomponente aufgeprägt wird. Alternativ oder zusätzlich wird das Medium zur Berandung hin beschleunigt, indem der Strömung zusätzlich zu einer Radialkomponente eine Drehkomponente aufgeprägt wird. Dies vergrößert in besonders einfacher Art und Weise den Abscheidegrad. Dabei wird die wesentliche Axialströmung zum Teil von einer Drehströmung oder Drallströmung überlagert, ohne dass das bevorzugte Wesen einer Axialströmung beeinflusst wird. Der Druckverlust wird somit besonders gering gehalten.

Betreffend die Vorrichtung wird die Aufgabe erfindungsgemäß gelöst mittels einer Abscheidervorrichtung mit einer axialen Ausdehnung und einer radialen Ausdehnung zum Entfernen von Fremdbestandteilen aus einer Strömung eines Mediums, welches als Arbeitsmedium einer Turbine zuführbar ist, umfassend
- einen Einlass zum axialen Einströmen des Mediums;
- mindestens eine Beschleunigungseinheit zum Beschleunigen mindestens eines Anteils des Mediums in eine außeraxiale Richtung,
- eine Öffnung an einer Berandung der radialen Ausdehnung zum Abzweigen eines Teilstroms des Mediums mit einem überwiegenden Anteil von Fremdbestandteile, und
- einen Auslass für ein axiales Weiterführen einer Hauptströmung des Mediums.

Der Vorteil der genannten Abscheidervorrichtung besteht darin, dass diese gegenüber üblichen Abscheidern oder Zyklonen oder Filtern nur eines geringen Bauraumes bedarf, so dass die Abscheidervorrichtung gemäß der vorgeschlagenen Art auch für mobile Turbinen geeignet ist. Insbesondere kann die Abscheidervorrichtung leicht in einem Zuleitungssystem für ein Arbeitsmedium bei einer Turbinenanlage integriert werden. So erweist sich die Konstruktion als besonders einfach und somit kostengünstig, wodurch die Wartung ebenfalls besonders einfach ermöglicht ist, insbesondere entfällt ein regelmäßiger Luftfilterwechsel.

Vorteilhafte Weiterbildungen der Abscheidervorrichtung sind den Unteransprüchen zu entnehmen. Diese geben insbesondere vorteilhafte Möglichkeiten an, eine Abscheidervorrichtung so auszubilden, dass eine Beeinträchtigung einer nachgeschalteten Turbine gering gehalten und ein Wirkungsgrad einer nachgeschalteten Turbine kaum beeinträchtigt ist, indem ein Druckabfall möglichst gering bei gleichzeitig größtmöglichen Entfernungen von Fremdbestandteilen aus der Strömung des Mediums gehalten ist.

Zur Sicherstellung von möglichst gleichbleibenden Druckverhältnissen im Strömungsverlauf des Arbeitsmediums ist der Auslass zusätzlich zum axialen Weiterführen der Hauptströmung in der Abscheidervorrichtung auch für ein axiales Ausströmen der Hauptströmung des Mediums mit einem verringerten Anteil von unerwünschten Bestandteilen ausgebildet. Das heißt, die Hauptströmung kann mit einem möglichst geringen Druckabfall einem Verdichter einer Turbine zugeleitet werden. Dabei erweist es sich als besonders vorteilhaft, eine horizontale Ausrichtung der axialen Ausdehnung bei der Abscheidervorrichtung vorzusehen, da auch die Turbine üblicherweise horizontal ausgerichtet ist.

Gemäß einer besonders bevorzugten Weiterbildung weist die Beschleunigereinheit ein drehbares Abscheiderrad und/oder einen Prallkörper auf. Diese könnten vorzugsweise in einer Kombination vorgesehen sein. Vorzugsweise ist ein drehbares Abscheiderrad und/oder ein Prallkörper auf einer axialen Achse bei der Abscheidervorrichtung vorgesehen. Der Prallkörper ist dabei vorzugsweise so ausgelegt, dass zunächst eine vergleichsweise schwache Richtungsänderung eingeleitet wird und dann durch das Abscheiderrad die Richtungsänderung verstärkt wird, so dass ein Druckabfall gering gehalten ist.

Des Weiteren ist es vorteilhaft, wenn die Öffnung der Berandung - im Folgenden auch Berandungsöffnung genannt - zum Abzweigen des Teilstroms in eine Leitung zur Aufnahme des Teilstroms mündet. Zweckmäßigerweise ist die Leitung in einem Winkel von weniger als 60° zur axialen Ausdehnung geneigt. Auf diese Weise lässt sich ein Teilstrom mit möglichst geringem Druckabfall für die Hauptströmung abzweigen.

Es ist weiterhin vorteilhaft, wenn die Berandungsöffnung in Strömungsrichtung des Mediums gesehen durch eine erste radiale Ausdehnung und eine zweite radiale Ausdehnung begrenzt ist. Dabei ist die zweite radiale Ausdehnung kleiner als die erste radiale Ausdehnung. Besonders vorteilhaft ist es, wenn die Berandungsöffnung zum Abzweigen des Teilstroms eine Trennkante aufweist, die in die Hauptströmung ragt. So lässt sich bei der Abscheidervorrichtung im Bereich der Peripherie ein Teilstrom von der Strömung durch die Trennkante an der Berandung vorzugsweise umfänglich "abschälen". Danach liegt dann ein separater Teilstrom und ein separater Hauptstrom vor. Mit der gewählten Weiterbildung lässt sich ein besonders hoher Abscheidegrad erreichen.

Zur weiteren Erhöhung des Abscheidegrades weist ein drehbares Abscheiderrad und/oder ein Prallkörper vorzugsweise einen Durchmesser auf, der kleiner als eine erste und größer als eine zweite radiale Ausdehnung der Berandungsöffnung ist. Dabei ist die zweite radiale Ausdehnung kleiner als die erste radiale Ausdehnung. Besonders vorteilhaft ist ein Abscheiderrad und/oder ein Prallkörper an und/oder vor einer Stelle entlang der axialen Ausdehnung der Berandungsöffnung angeordnet. Dabei ragt zweckmäßigerweise ein Umfang eines Abscheiderrades und/oder eines Prallkörpers in die Berandungsöffnung. Unerwünschte Bestandteile können auf diese Weise praktisch in den Teilstrom hinein geführt werden.

Gemäß einer weiteren vorteilhaften Weiterbildung lässt sich eine Abscheidervorrichtung besonders effektiv gestalten, wenn mehrere Beschleunigungseinheiten zum Abscheiden entlang der axialen Ausdehnung hintereinander angeordnet sind. Beispielsweise sind mehrere Beschleunigungseinheiten in Stufen angeordnet. Auf diese Weise lässt sich der Abscheidergrad weiter verbessern. Eine Abscheidervorrichtung kann also einstufig oder mehrstufig ausgeführt sein. Vorteilhaft weist eine Abscheidervorrichtung auch ein Schutzgitter zum Schutz gegen Kleinteile oder ein Vogelschutzgitter auf.

In einer bevorzugten Ausführungsform ist ein drehbares Abscheiderrad als ein Verdichterrad, insbesondere als ein Verdichterrad eines der Turbine vorgeschalteten Verdichters ausgebildet. Durch eine derartige Integration der Abscheidervorrichtung als Teil des Verdichters ist eine besonders kompakte Bauform ermöglicht.

Die Erfindung betrifft ferner eine Turbinenanlage mit einem Verdichter und einer Turbine, bei der erfindungsgemäß eine der Turbine vorgeschaltete Abscheidervorrichtung gemäß dem oben vorgeschlagenen Konzept oder einer Weiterbildung derselben vorgesehen ist. Gemäß einer Weiterbildung ist die Abscheidervorrichtung in einer Zuleitung für ein Arbeitsmedium integriert. Alternativ kann die Abscheidervorrichtung als Teil des Verdichters ausgebildet sein. In beiden Fällen wird die Abscheidervorrichtung mittels einer Kupplung an den Verdichter gekoppelt. Auf diese Weise lässt sich ein Abscheiderrad der Abscheidervorrichtung besonders vorteilhaft über die Kupplung drehen.

Die oben genannte Abscheidervorrichtung wird gemäß dem vorgeschlagenen Konzept vor allem zum Entfernen von Fremd- oder unerwünschten Bestandteilen aus einer Gas- und/oder Luftströmung, die einer stationären Turbine als Arbeitsmedium zugeleitet wird, verwendet. Während sich das vorgeschlagene Konzept als besonders vorteilhaft für stationäre Turbinen, insbesondere im Kraftwerksbereich, erweist und während es auch anhand solcher Beispiele im Folgenden im Detail beschrieben wird, so kann das Konzept auch bei einer Reihe von anderen Turbinenanlagen, z. B. mobilen Turbinen, verwendet und als Teil solcher Turbinenanlagen vorteilhaft genutzt werden. Beispielsweise kann das Konzept auch im Rahmen einer mobilen Turbinenanlage, wie sie im Kraftfahrzeug- oder Flugzeugbereich vorgesehen ist, verwendet werden. Eine Abscheidervorrichtung gemäß dem vorgeschlagenen Konzept weist hierbei einen geringen Platzbedarf auf und kann zudem vorteilhaft in der Zuleitung zu einer Turbine in integrierter Weise eingebaut werden. Auch lässt sich ein Abscheiderrad als Verdichterrad öder ein Abscheiderrad als Teil eines Verdichters ausbilden, was den Wirkungsgrad einer stationären oder mobilen Turbine erhöhen kann und den Platzbedarf für die Abscheidervorrichtung verringert.

Ausführungsbeispiele der Erfindung werden nachfolgend anhand einer Zeichnung näher beschrieben. Darin zeigen:
- FIG 1: schematisch eine Gasturbinenanlage mit einem Verdichter und einer Turbine und einer dem Verdichter vorgeschalteten Abscheidervorrichtung,
- FIG 2: schematisch die Abscheidervorrichtung im Querschnitt anhand eines Ausschnitts aus Figur 1.

Einander entsprechende Teile sind in allen Figuren mit den gleichen Bezugszeichen versehen.

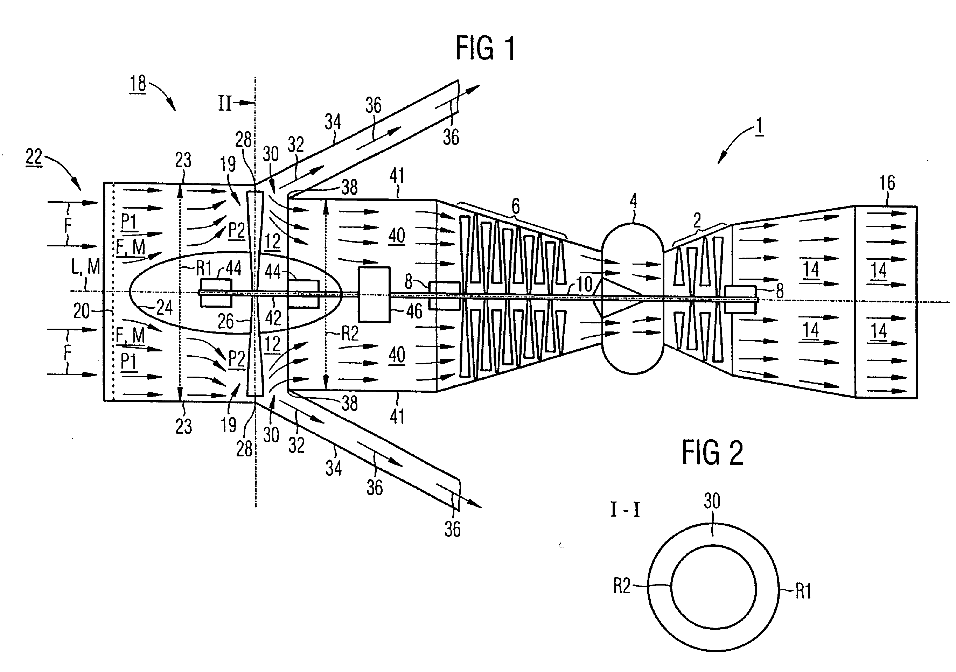

Die Figur 1 zeigt eine Turbinenanlage 1 mit einer Turbine 2, die über eine Brennkammer 4 und einen Verdichter 6 mit komprimierter Frischluft F versorgt wird. Die Turbine 2 ist über ein Lager 8 auf einer Achse 10 drehbar gelagert. Der Antrieb der Turbine 2 erfolgt durch Reinluft 12, welche im Verdichter 6 komprimiert und in der Brennkammer 4 aufgeheizt wird, so dass die Turbine 2 mit möglichst hohem Wirkungsgrad angetrieben wird. Das Abgas 14 wird aus der Turbine 2 in einer Abgasleitung 16 geführt.

In der Gasturbinenanlage 1 der Figur 1 ist der Turbine 2 eine Abscheidervorrichtung 18 vorgeschaltet. Mittels der Abscheidervorrichtung 18 werden Fremdbestandteile, wie z. B. Schmutzpartikel, Staub oder auch Wassertröpfchen aus der angesaugten Frischluft F, die über einen Einlass 20 angesaugt wird, entfernt. Zunächst wird die Frischluft F über ein Gitter 22 von Kleinteilen oder größeren Fremdkörpern bereinigt und dem als eine Zuleitung 23 ausgebildeten Einlass 20 zugeführt. Das Gitter 22 ist beispielsweise als ein Vogelschutzgitter ausgebildet, was sich insbesondere im Falle einer mobilen Turbinenanlage, z. B. bei einem Flugzeug, als günstig erweist.

Die Abscheidervorrichtung 18 weist eine axiale Ausdehnung L, eine erste radiale Ausdehnung R1 und eine zweite radiale Ausdehnung R2 auf, wobei die zweite radiale Ausdehnung R2 kleiner ist als die erste radiale Ausdehnung R1. Zwischen der ersten radialen Ausdehnung R1 und der zweiten radialen Ausdehnung R2 umfasst die Abscheidervorrichtung 18 eine Beschleunigungseinheit 19 mit einem Prallkörper 24 und einem Schmutzabscheiderrad 26. Die Beschleunigungseinheit 19 dient der Beschleunigung eines Anteils des Mediums M in eine außeraxiale Richtung. Je nach Art und Ausbildung der Abscheidervorrichtung 18 kann diese mehrere Beschleunigungseinheiten 19 umfassen. In der Figur umfasst die Beschleunigungseinheit 19 beispielhaft den Prallkörper 24 zur radialen Umlenkung der Strömung der Frischluft F und das Schmutzabscheiderrad 26 zur außeraxialen und radialen Beschleunigung. Beide Mittel beschleunigen somit die schmutzbeladene Frischluft F in eine außeraxiale Richtung zu einer Berandung 28 der Abscheidervorrichtung 18 hin.

Dabei sind das Schmutzabscheiderrad 26 und der Prallkörper 24 so ausgelegt, dass insbesondere eine radiale Beschleunigung der Frischluft F mit möglichst wenig Druckverlust bewirkt wird. Dazu ist der Prallkörper 24 strömungsgünstig ausgelegt. Die der Strömung von Frischluft F aufgeprägte Radialkomponente ist durch Pfeile P1 und P2 veranschaulicht. Dabei wirkt der Prallkörper 24 wie eine erste Beschleunigungsstufe und das Schmutzabscheiderrad 26 wie eine zweite Beschleunigungsstufe, insbesondere auch für die Schmutzpartikel.

Das Schmutzabscheiderrad 26 ragt mit seiner umfänglichen Berandung zumindest teilweise in eine Öffnung 30 der Berandung 28 hinein. Die Öffnung 30 ist als eine umlaufende Öffnung ausgebildet, deren Durchmesser in Strömungslängsrichtung gesehen und somit entlang der axialen Achse 10 variiert. Dabei ist die Öffnung 30 in ihrer Längsausrichtung in Strömungsrichtung gesehen eingangsseitig durch die erste radiale Ausdehnung R1 und ausgangsseitig durch die zweite radiale Ausdehnung R2 begrenzt. Mit anderen Worten: Die radial umlaufende Öffnung 30 der Berandung 28 weist in Längsausrichtung einen kontinuierlich abnehmenden Durchmesser auf. Für ein besonders sicheres Abscheiden der Fremdbestandteile aus der Frischluft F weist die Öffnung 30 zumindest teilweise in Längsrichtung einen größeren Durchmesser als die zweite radiale Ausdehnung R2 auf.

Beim Betrieb der Abscheidervorrichtung 18 wird die angesaugte Frischluft F in Richtung der Außenkante des Schmutzabscheiderrades 26 beschleunigt und dort zumindest ein Teilstrom 32 der Frischluft F über eine Leitung 34 als Abluft 36 zusammen mit dem überwiegenden Anteil von Fremdbestandteilen oder unerwünschten Bestandteilen abgezweigt. Je nach Art und Ausbildung der Leitung 34 kann diese geteilt oder segmentiert sein. Das Abzweigen wird durch eine Trennkante 38 unterstützt. Die andere auf diese Weise von unerwünschten Bestandteilen bereinigte Hauptströmung 40 der Frischluft F wird als Reinluft 12 über einen Auslass 41 dem Verdichter 6 zugeführt.

Das Schmutzabscheiderrad 26 und der Prallkörper 24 der Abscheidervorrichtung 18 sind axial auf einer Welle oder Achse 42 in Ausrichtung zu der axialen Welle oder Achse 10 der Turbine 2 und des Verdichters 6 gelagert. Hierzu weist die Abscheidervorrichtung 18 entsprechende Achslager 44 auf. Zwischen der axialen Achse 10 der Verdichter-Turbinen-Einheit und der Achse 42 für die Abscheidervorrichtung 18 ist eine Kupplung 46 zwischengeschaltet. Auf diese Weise dreht das Schmutzabscheiderrad 26 mit der gleichen Geschwindigkeit wie der Verdichter 6 und/oder die Turbine 2. Gemäß der hier vorliegenden, besonders bevorzugten Ausführungsform ist das Schmutzabscheiderrad 26 als ein Verdichterrad ausgelegt. Alternativ kann das Schmutzabscheiderrad 26 auch separat angeordnet sein.

Gemäß einer Abwandlung der bevorzugten Ausführungsform könnte die Kupplung 46 auch mit einer Übersetzung versehen sein, um das Schmutzabscheiderrad 26 mit anderen Drehgeschwindigkeiten als die des Verdichters 6 oder der Turbine 2 zu drehen.

Im Betrieb wird das der Turbine 2 als Frischluft F zugeleitete Medium M mit einem Anteil von Fremd- oder unerwünschten Bestandteilen in die Abscheidervorrichtung 18 geführt, die eine axiale Ausdehnung L und eine erste und zweite radiale Ausdehnung R1 bzw. R2 und eine radiale Berandung 28 aufweist. Das vorgeschlagene Konzept sieht vor, dass zum Einströmen das Medium M mit unerwünschten Bestandteilen axial in die Abscheidervorrichtung 18 einströmt. Zum Abscheiden ist vorgesehen, dass das Medium M mit unerwünschten Bestandteilen in mindestens einer Stufe der Abscheidervorrichtung 18 in eine außeraxiale Richtung beschleunigt wird und der Teilstrom 32 des Mediums M mit dem Großteil der unerwünschten Bestandteile durch die Öffnung 30 der Berandung 28 abgezweigt wird. Zum Ausströmen ist vorgesehen, dass die Hauptströmung 40 des Mediums M mit dem verringerten Anteil von unerwünschten Bestandteilen axial weitergeführt wird.

## Patentansprüche

1. Verfahren zum Entfernen von Fremdbestandteilen aus einer Strömung eines Mediums (M), welches insbesondere als Arbeitsmedium einer Turbine (2) zugeführt wird, bei dem das Medium (M) einer Abscheidervorrichtung (18) in axiale Richtung zugeführt und in mindestens einer Stufe der Abscheidervorrichtung (18) in eine außeraxiale Richtung beschleunigt wird, wobei ein einen überwiegenden Anteil der Fremdbestandteile aufweisender Teilstrom (32) an einer Berandung (28) einer radialen Ausdehnung (R1, R2) der Abscheidervorrichtung (18) abgezweigt und eine Hauptströmung (40) des Mediums (M) in der Abscheidervorrichtung (18) axial weitergeführt wird.

2. Verfahren nach Anspruch 1,
**dadurch gekennzeichnet, dass**
die Hauptströmung (40) axial aus der Abscheidervorrichtung (18) ausgeströmt wird.

3. Verfahren nach Anspruch 1 oder 2,
**dadurch gekennzeichnet, dass**
der Teilstrom (32) im Wesentlichen in Richtung der außeraxialen Richtung der Beschleunigung aus der Abscheidervorrichtung (18) abgeführt wird.

4. Verfahren nach einem der Ansprüche 1 bis 3,
**dadurch gekennzeichnet, dass** mindestens ein Anteil des Mediums (M) zur Berandung (28) hin beschleunigt wird, indem der Strömung eine Radialkomponente aufgeprägt wird.

5. Abscheidervorrichtung (18) mit einer axialen Ausdehnung (L) und einer radialen Ausdehnung (R1, R2) zum Entfernen von Fremdbestandteilen aus einer Strömung eines Mediums (M), welches insbesondere als Arbeitsmedium einer Turbine (2) zuführbar ist, umfassend
- einen Einlass (20) zum axialen Einströmen des Mediums (M),
- mindestens eine Beschleunigungseinheit (19) zum Beschleunigen mindestens eines Anteils des Mediums (M) in eine außeraxiale Richtung,
- eine Öffnung (30) an einer Berandung (28) der radialen Ausdehnung (R1, R2) zum Abzweigen eines Teilstroms (32) des Mediums (M) mit einem überwiegenden Anteil von Fremdbestandteilen, und
- einen Auslass (41) für ein axiales Weiterführen einer Hauptströmung (40) des Mediums (M).

6. Abscheidervorrichtung nach Anspruch 5,
**dadurch gekennzeichnet, dass**
der Auslass für ein axiales Ausströmen der Hauptströmung (40) des Mediums (M) ausgebildet ist.

7. Abscheidervorrichtung nach Anspruch 5 oder 6,
**gekennzeichnet durch**
eine horizontale Ausrichtung der axialen Ausdehnung (L).

8. Abscheidervorrichtung nach einem der Ansprüche 5 bis 7,
**dadurch gekennzeichnet, dass**
die Beschleunigungseinheit (19) ein drehbares Abscheiderrad (26) und/oder einen Prallkörper (24) umfasst.

9. Abscheidervorrichtung nach Anspruch 8,
**dadurch gekennzeichnet, dass**
das drehbare Abscheiderrad (26) und der Prallkörper (24) auf einer axialen Achse (42) angeordnet sind.

10. Abscheidervorrichtung nach einem der Ansprüche 5 bis 9,
**dadurch gekennzeichnet, dass**
die Öffnung (30) der Berandung (28) zum Abzweigen des Teilstroms (32) in eine Leitung (34) zur Aufnahme des Teilstroms (32) mündet, die in einem Winkel von weniger als 60° zur axialen Ausdehnung (L) geneigt ist.

11. Abscheidervorrichtung nach einem der Ansprüche 5 bis 10,
**dadurch gekennzeichnet, dass**
die Öffnung (30) der Berandung (28) in Strömungsrichtung des Mediums (M) gesehen durch eine erste radiale Ausdehnung (R1) und eine zweite radiale Ausdehnung (R2) begrenzt ist, wobei die zweite radiale Ausdehnung (R2) kleiner als die erste radiale Ausdehnung (R1) ist.

12. Abscheidervorrichtung nach einem der Ansprüche 5 bis 11,
**dadurch gekennzeichnet, dass**
die Öffnung (30) der Berandung (28) eine Trennkante (38) aufweist, die in die Hauptströmung (40) ragt.

13. Abscheidervorrichtung nach einem der Ansprüche 5 bis 12,
**dadurch gekennzeichnet, dass**
ein drehbares Abscheiderrad (26) und/oder ein Prallkörper (24) einen Durchmesser aufweist, der kleiner als eine erste radiale Ausdehnung (R1) und größer als eine zweite radiale Ausdehnung (R2) der Öffnung (30) der Berandung (28) ist.

14. Abscheidervorrichtung nach einem der Ansprüche 5 bis 13,
**dadurch gekennzeichnet, dass**
ein Abscheiderrad (26) und/oder ein Prallkörper (24) entlang der axialen Ausdehnung (L) an und/oder vor der Öffnung (30) der Berandung (28) angeordnet ist.

15. Abscheidervorrichtung nach einem der Ansprüche 5 bis 14,
**dadurch gekennzeichnet, dass**
ein drehbares Abscheiderrad (26) als ein separates Verdichterrad und/oder als ein Verdichterrad einer Verdichterstufe ausgebildet ist.

16. Abscheidervorrichtung nach einem der Ansprüche 5 bis 15,
**dadurch gekennzeichnet, dass**
entlang der axialen Ausdehnung (L) mehrere Beschleunigungseinheiten (19) hintereinander angeordnet sind.

17. Turbinenanlage (1) mit einem Verdichter (6) und einer Turbine (2),
**gekennzeichnet durch**
eine der Turbine (2) vorgeschalteten Abscheidervorrichtung (18) nach einem der Ansprüche 5 bis 16.

18. Turbinenanlage nach Anspruch 17,
**dadurch gekennzeichnet, dass**
die Abscheidervorrichtung (18) in einer Zuleitung (23) für ein Arbeitsmedium der Turbine (2) integriert ist.

19. Turbinenanlage nach Anspruch 17 oder 18,
**dadurch gekennzeichnet, dass**
die Abscheidervorrichtung (18) über eine Kupplung (46) mit dem Verdichter (6) gekoppelt ist.

20. Turbinenanlage nach einem der Ansprüche 17 bis 19,
**dadurch gekennzeichnet, dass**
die Turbine (2) als eine stationäre Turbine ausgebildet ist.

21. Verwendung einer Abscheidervorrichtung (18) nach einem der Ansprüche 5 bis 16 zum Entfernen von Fremdbestandteilen aus einer Gas- und/oder Luftströmung, die einer stationären Turbine (2) als Arbeitsmedium zugeführt wird.
